# FASCICULE DE BREVET EUROPEEN

(11) **EP 2 107 654 B1**
(45) Date de publication et mention de la délivrance du brevet: **10.11.2010**
(21) Numéro de dépôt: 09354012.8
(22) Date de dépôt: 10.03.2009
(51) Int. Cl.: H02B 1/30

(54) **Assemblage d'un coffret électrique**
Zusammenbau eines Stromkastens
Assembly of an electrical cabinet

(30) Priorité: 01.04.2008 FR 0801792
(43) Date de publication de la demande: 07.10.2009
(73) Titulaire: Schneider Electric Industries SAS, 92500 Rueil-Malmaison (FR)
(72) Inventeur: Buet, Jacques, 38050 Grenoble Cedex 09 (FR); Corbalan, Jérôme, 38050 Grenoble Cedex 09 (FR); Reppelin, Jean-Marc, 38050 Grenoble Cedex 09 (FR)
(74) Mandataire: Péru, Laurence

(56) Documents cités:
- EP-A- 0 798 953
- EP-A- 1 251 611

## Description

### DOMAINE TECHNIQUE

L'invention concerne les coffrets destinés à loger des appareillages électriques, tels des disjoncteurs, qui sont réalisés à partir de composants isolés assemblés, c'est-à-dire « en kit ». Plus particulièrement, l'invention se rapporte à une conception de l'ensemble formant l'enveloppe du coffret telle que la rigidité de l'enveloppe est augmentée sans alourdir ni le coffret, ni son procédé d'assemblage. En outre, grâce à la conception selon l'invention, il est possible de faciliter l'accrochage du coffret sur un mur ainsi que la mise en place d'éléments de protection face aux intempéries, tout en minimisant le nombre de références industrielles.

### ETAT DE LA TECHNIQUE

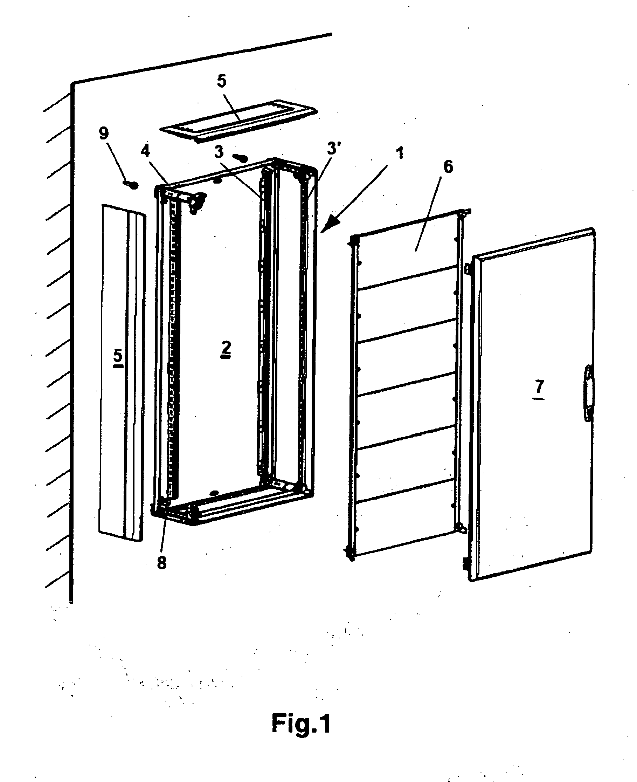

Un coffret sert principalement à protéger les éléments s'y trouvant contre l'intrusion de corps solides, notamment supérieurs à 2,5 mm (protection dite IP30), parfois également contre la pluie (protection dite IP31), voire avec un degré d'étanchéité supérieure (comme l'IP43 : protection contre l'intrusion de corps solides supérieurs à 1 mm et contre les projections d'eau de toutes directions). Tel que par exemple décrit dans les documents FR 2 841 055 ou EP 0 798 953, les coffrets contenant les appareillages électriques peuvent être réalisés par assemblage entre différents composants. Notamment, un coffret électrique « en kit » 1 illustré en figure 1 comprend une paroi de fond 2 équipée de montants fonctionnels 3 comportant des orifices de fixation de l'appareillage électrique (éventuellement par l'intermédiaire de rails) et quatre piliers d'angle 4 solidarisés orthogonalement à la paroi de fond 2 ; l'habillage comprend quatre panneaux latéraux 5, des montants 3' permettant de supporter un ensemble de plastrons 6 et une porte 7 ; d'autres composants peuvent être prévus.

Une fois assemblé, le coffret 1 peut être suspendu sur un mur. Ce montage peut s'avérer complexe : usuellement, des orifices 8 sont percés dans la paroi de fond 2, et le coffret 1 équipé est mis en place « à l'aveugle » par l'insertion de ces orifices 8 sur des fixations 9 du mur. Outre les problèmes de mise à niveau du coffret, le poids conséquent du coffret 1 (parfois supérieur à 50 kg) peut nécessiter l'intervention de plusieurs opérateurs.

Bien que d'usage éprouvé, l'ensemble constituant le coffret 1 peut ainsi être amélioré en ce qui concerne son montage. Par ailleurs, comme la rigidité du coffret 1 est assurée par les panneaux latéraux 5, pour conserver une certaine solidité lors des premières étapes d'assemblage, la paroi de fond 2 est épaisse et une optimisation est également souhaitable à cet égard. En outre, le nombre de références industrielles couvrant les différentes options, par exemple relatives à l'étanchéité ou aux dimensions, peut être rationalisé.

### EXPOSE DE L'INVENTION

Parmi autres avantages, l'invention vise à pallier des inconvénients des coffrets en kit existants. En particulier, un coffret à assembler selon l'invention comprend des composants optimisés en poids et forme, parmi lesquels en outre des moyens intégrés permettent de suspendre le coffret sur un rail. Les différentes étapes d'assemblage de l'enveloppe du coffret sont prévues pour ne comprendre que des vissages et des emboîtements assistés, en nombre limité, au moment de l'équipement en appareillage électrique.

Sous un aspect, l'invention est ainsi relative à un ensemble pour fabriquer un coffret électrique dont l'enveloppe est sensiblement parallélépipédique rectangle. L'ensemble comprend une partie de fond, de préférence réalisée par soudage préalablement à l'assemblage de l'enveloppe, qui est composée d'une paroi de fond sensiblement rectangulaire formant une surface de l'enveloppe du coffret munie de deux traverses et de deux montants comprenant chacun un profilé creux. Une première surface des profilés est solidarisée à la paroi de fond le long d'un de ses côtés et une deuxième surface des profilés, parallèle à la première surface, est munie d'au moins un orifice de fixation, de sorte que la partie de fond comprend quatre coins encadrant quatre arêtes définies par la paroi de fond et un rebord qui lui est orthogonal, chaque coin donnant accès à une extrémité ouverte d'un profilé de traverse et d'un profilé de montant. La paroi de fond peut être comprise dans une tôle métallique qui est pliée pour former au moins deux rebords de la partie de fond.

Il est avantageux qu'une traverse au moins soit solidarisée le long d'un côté de la paroi de fond de façon à former une arête et un rebord. Une traverse de ce type comprend de préférence une troisième surface prolongeant, du côté opposé au rebord et de façon sensiblement parallèle, la première surface de sorte que la paroi de fond est localisée au sein de son profilé : la traverse forme alors une cymaise de suspension du coffret électrique, apte à coopérer avec un rail accroché sur un mur. Il est dans ce cas préférable que des protubérances, par exemple sur la première surface, servent d'entretoises pour maintenir la distance entre l'enveloppe du coffret et le mur.

L'ensemble selon l'invention comprend en outre quatre piliers d'angle, avec chacun une embase et deux faces externes orthogonales entre elles et à l'embase ; les piliers d'angle peuvent chacun s'emboîter dans un coin de la partie de fond, leur embase comprenant des moyens de fixation, notamment des orifices de vissage, qui peuvent coopérer avec un orifice de fixation des profilés dudit coin. De préférence, les piliers sont symétriques, en matériau plastique ce qui permet de mettre à profit la facilité de fabrication de formes complexes, avec d'éventuels renforts métalliques pour permettre des vissages aisés et assurer une continuité électrique entre les différents composants.

L'ensemble selon l'invention comprend de préférence des parois latérales pour fermer l'espace entre les piliers externes de l'enveloppe. Il est avantageux que les faces externes des piliers forment une partie de l'enveloppe du coffret et restent apparentes en fin d'habillage, les parois se mettant en place contre une aile prolongeant de façon décalée les faces externes du pilier. Les parois d'un même coffret peuvent être similaires ou en matériau différent, voire en plusieurs parties notamment en ce qui concerne les parois passe-câbles. Il est possible que la paroi supérieure du coffret soit un auvent plastique permettant de protéger le coffret contre la pluie, c'est-à-dire dépassant de l'enveloppe proprement dite du coffret.

L'ensemble selon l'invention comprend avantageusement également une porte destinée à refermer l'enveloppe parallèlement à la paroi de fond. Des rails de support de plastrons peuvent être prévus, et il est avantageux que les piliers, voire les parois latérales, comprennent des moyens permettant de maintenir et/ou fixer les rails de support.

Selon une option de l'invention, l'ensemble pour fabriquer un coffret électrique peut être associé à un ensemble pour une extension du coffret électrique. L'enveloppe de l'extension comprend une deuxième partie de fond similaire à la première partie de fond du coffret et qui peut lui être juxtaposée ; les deux parties de fond, et plus généralement les deux enveloppes, sont de préférence réalisées à partir des mêmes composants, l'ensemble pour extension comprenant alors deux parois latérales, des rails de support et des plastrons, une porte, etc. L'ensemble de l'extension comprend également deux piliers d'association qui peuvent s'emboîter dans l'espace formé par deux coins côte à côte des parois de fond du coffret et de l'extension. Chaque pilier d'association comprend ainsi une face externe et une embase, qui lui est orthogonale, comprenant des moyens de fixation qui peuvent coopérer avec un orifice de fixation des profilés de chacun desdits coins. En particulier pour le montage d'un auvent, il est avantageux que la face externe d'un pilier d'association comprenne une surface munie d'une gorge d'évacuation.

L'invention se rapporte également à un coffret électrique, éventuellement associé à une ou plusieurs extensions, dont les éléments de l'enveloppe sont assemblés.

### BREVE DESCRIPTION DES FIGURES

D'autres avantages et caractéristiques ressortiront plus clairement de la description qui suit de modes particuliers de réalisation de l'invention, donnés à titre illustratif et nullement limitatifs, représentés dans les figures annexées.
La figure 1, déjà décrite, illustre de façon schématique semi-éclatée les différents éléments d'un coffret et de son montage sur un mur selon l'art antérieur.
Les figures 2A et 2B représentent les composants de la partie de fond d'une enveloppe de coffret selon un mode de réalisation préféré de l'invention.
Les figures 3A et 3B montrent un pilier d'angle et son assemblage selon un mode de réalisation préféré de l'invention.
La figure 4 montre un pilier d'association et son assemblage selon un mode de réalisation préféré de l'invention.
Les figures 5A, 5B et 5C représentent des parties assemblées de l'ensemble pour coffret selon l'invention.
Les figures 6A et 6B montrent un auvent placé sur un coffret selon l'invention.

### DESCRIPTION DETAILLEE D'UN MODE DE REALISATION PREFERE

Un coffret électrique 1 est usuellement accroché à un mur ou placé « debout » sur des pieds : la paroi de fond 2 et la porte 7 du coffret 1 sont verticales ; par convention, le terme « montant » sera utilisé pour les éléments 3, 3' se trouvant alors également en position verticale, et le terme « traverse » pour des composants se trouvant en position horizontale. Cependant, par souci de clarté et de concision, les différentes parties du coffret 1 seront décrites ci-après dans une position d'assemblage du coffret 1, dans laquelle la paroi de fond 2 et la porte 7 sont horizontales, les piliers d'angle 4 ainsi que les panneaux latéraux 5 se dressant verticalement ; il est entendu que ces termes ne sont nullement restrictifs quant à l'objet de l'invention. Enfin, les termes géométriques, tels que « rectangle », « orthogonal »,... doivent se comprendre dans leur acceptation mécanique, c'est-à-dire tolérant un écart par rapport à la définition mathématique stricte : par exemple, deux parois « orthogonales » peuvent, selon l'invention, définir un angle différant légèrement de 90°.

Un coffret 100 selon l'invention comprend une enveloppe parallélépipédique rectangle pouvant couvrir la gamme usuelle de ce genre de coffret en kit, et notamment d'une largeur de module de 300 ou 600 mm sur une profondeur de l'ordre de 200 mm pour une hauteur comprise entre 350 et 1850 mm ; il est réalisé sur un principe proche des coffrets en kit existants, certains composants étant cependant optimisés pour faciliter la manutention, l'assemblage et le montage.

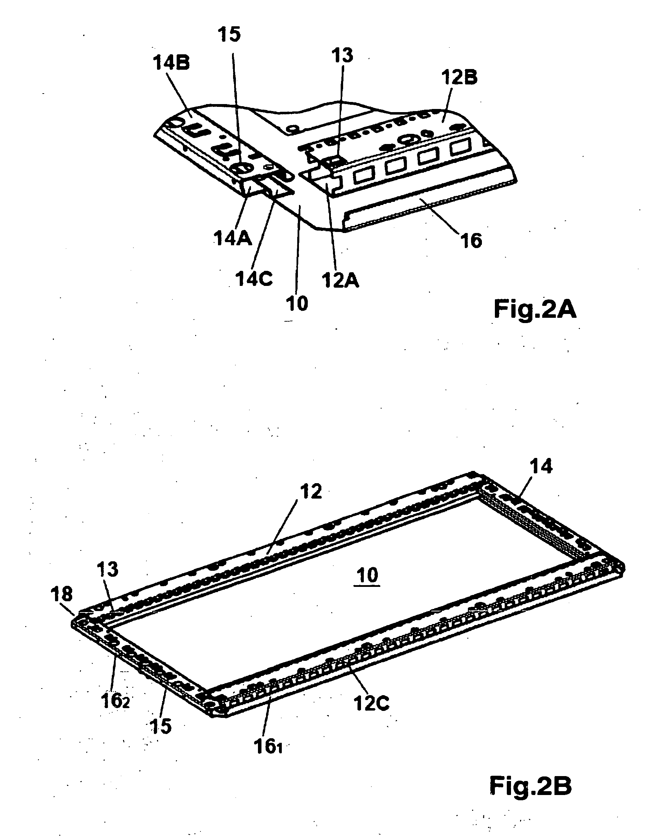

En particulier, les différents composants d'un coffret 100 selon l'invention sont montés sur une paroi de fond 10 sensiblement rectangulaire illustrée partiellement en figure 2A, qui forme une partie de l'enveloppe du coffret, dont au moins une surface extérieure qui sera face au mur. Sur la surface interne de la paroi 10, tel qu'illustré en figure 2B, sont mis en place des montants fonctionnels 12, comportant des orifices de fixation 13 de l'appareillage électrique, éventuellement par l'intermédiaire de rails ; en particulier, deux montants fonctionnels 12 sont parallèles à deux bords opposés de la paroi 10 et sont destinés à être verticaux lors du montage du coffret 100 sur le mur.

La paroi de fond 10 subit les contraintes exercées par le poids des appareillages sur les montants 12 et le poids de l'enveloppe du coffret 100 lui-même. Pour augmenter sa résistance à la flexion et à la torsion tout en diminuant son épaisseur, la paroi de fond 10 est formée par une plaque de faible épaisseur, par exemple en acier de l'ordre de 0,8 mm, voire 0,6 mm, sur laquelle sont en outre solidarisées des traverses 14 orthogonales aux montants 12, de façon à prédéfinir un cadre ; avantageusement, afin de rigidifier la partie de fond 10, 12, 14, les composants sont soudés sur un nombre de points ou une distance adéquats - toute autre option de solidarisation, de type rivetage (qu'il soit auto-perforant, à rupture de tige ou à aiguille) ou collage par colle structurale, ou autre accrochage apportant une robustesse suffisante est également appropriée. Chacun des montants 12 et traverses 14 est formé par un profilé métallique d'épaisseur adéquate, notamment entre 0,8 et 1,2 mm, ledit profilé comprenant une première surface 12A, 14A qui sera soudée sur la paroi de fond 10 ; une deuxième surface 12B, 14B de chaque profilé est parallèle à la première surface 12A, 14A, localisée à l'intérieur du coffret 100 et munie d'orifices 13, 15 de montage ; il y a avantageusement superposition partielle sans contact dans les coins des deuxièmes surfaces 12B, 14B.

La finalisation de la partie de fond 10, 12, 14 est par exemple réalisée lors de la fabrication, c'est-à-dire que le client qui assemble et équipe le coffret utilise directement une partie de fond de l'enveloppe qui est unitaire et formée d'une paroi de fond 10 munie des traverses 14 et montants 12, qui comprend, sur ses bords, quatre arêtes définies par la surface de la paroi de fond 10 et un rebord 16. Les rebords 16 peuvent être formés par la même tôle que la paroi de fond 10 qui est repliée ; notamment, les montants fonctionnels 12 sont avantageusement solidarisés contre, ou proches, des rebords 16₁ pliés. Tel qu'illustré en figures 2, selon un mode de réalisation préféré de l'invention, les traverses 14 sont quant à elles solidarisées à l'extérieur de l'enveloppe du coffret, c'est-à-dire que les premières surfaces des traverses 14A et des montants 12A sont soudées de part et d'autre de la paroi de fond 10. Ainsi, deux rebords 16₂ sont formés par le profilé des traverses 14, et les deux autres 16₁ par la tôle de la paroi de fond 10. Il est possible également que seule une traverse 14 compose un rebord 16₂ et que la deuxième traverse soit formée et assemblée de la même façon que les montants 12.

L'assemblage des traverses 14 et montants 12 sur la plaque formant la paroi de fond 10 est facilité : il est possible de simplement aligner les profilés 12, 14 le long des bords de la paroi de fond 10 avant de les souder. En effet, selon l'invention, les coins 18 de la paroi de fond 10 sont ouverts : les quatre arêtes définies par les rebords 16 et la plaque face au mur ne se joignent pas, laissant un secteur 18 «vide» à chaque angle entre les rebords 16 de sorte que le rectangle de fond 10 de l'enveloppe du coffret n'est pas fermé aux angles.

La rigidité partielle de la partie de fond 10, 12, 14 d'un ensemble pour coffret selon l'invention n'est pas problématique. De fait, selon l'invention, le maintien des composants 12, 14 est assuré par leur soudage sur la paroi de fond 10, et la rigidité est achevée par la mise en place des piliers 20 : il ne s'agit pas d'une ossature d'armoire électrique telle que décrite par exemple dans le document EP 1 748 525 dans laquelle les parois latérales ne jouent qu'un rôle d'habillage sur un parallélogramme complet formés de montants et traverses solidarisés entre eux en trièdres par une pièce d'angle additionnelle ; par rapport aux solutions de l'art antérieur, l'assemblage d'un coffret en kit n'est modifié qu'en ce que deux traverses 14 sont ajoutées, leur présence pouvant d'ailleurs être neutre pour l'assembleur final. L'ensemble soudé, ou autrement assemblé tel que précisé plus haut, servant de support à l'assemblage de l'enveloppe du coffret comprend ainsi quatre coins ouverts 18, qui donnent un accès vers l'intérieur des profilés 12, 14, et plus spécifiquement à l'espace délimité entre les deuxièmes surfaces 12B, 14B et la surface interne de la paroi de fond 10. De préférence, l'espace délimité par le coin 18 est complètement ouvert, avec une découpe appropriée de la tôle 10.

L'espace de coin 18 est fermé par les piliers d'angle 20, étape d'assemblage qui peut être réalisée, comme pour toutes les enveloppes en kit, au moment du montage du coffret, directement chez le client. Les piliers d'angle 20 sont avantageusement tous identiques et symétriques même s'il est possible, selon les configurations de coffret 100 et leurs fonctionnalités, de les différentier. Chaque pilier 20 se met en place par emboîtement dans un coin libre 18 et est solidarisé sur le montant 12 et la traverse 14 : cet assemblage simple rigidifie la structure du coffret 100.

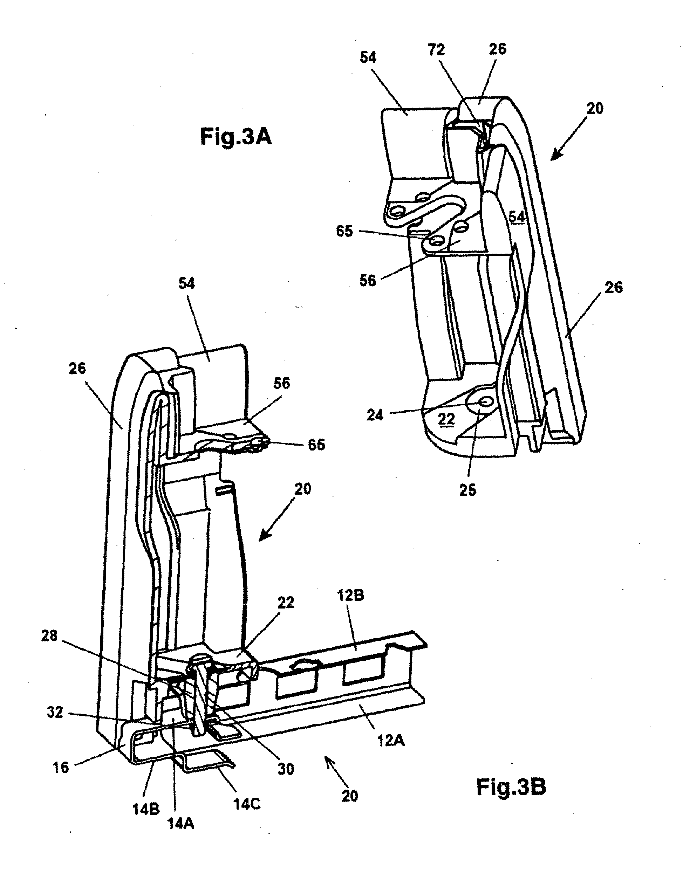

Les piliers 20, dont un mode de réalisation est illustré en figure 3A, comprennent ainsi une embase 22 munie de moyens de fixation 24, 25 avec le cadre 12, 14 ; l'embase 22 est solidaire de deux faces orthogonales 26 du pilier 20 qui forment l'ossature externe, orthogonale à la paroi de fond 10, et dont la hauteur détermine la profondeur du coffret. L'embase 22 est distante des extrémités des faces externes 26, le décalage de l'embase 22 étant adapté à la distance séparant la surface extérieure 14A de la partie de fond 10 de la deuxième surface 12B d'un profilé la plus interne au coffret 100. Le pilier 20 peut être réalisé en métal mais, avantageusement il est fabriqué en plastique moulé de sorte que les formes spécifiques peuvent être réalisées à coût réduit et en grande quantité ; en particulier, le plastique de type PA66 offre un bon compromis entre densité (et donc gain en masse) et résistance aux chocs, sachant qu'en outre sa coloration dans la masse permet de conserver un aspect esthétique en cas de rayures ou autres agressions mécaniques. Dans le cas de piliers en matériau polymère non conducteur, la présence de renforts métalliques 25 au niveau des moyens de connexion 24 est avantageuse en ce qu'un vissage de vis à pas métrique n'abîme pas le pilier, ce qui permet plusieurs montages et démontages ; en outre, les renforts métalliques peuvent être dessinés pour offrir une continuité électrique naturelle entre les différents éléments qui se fixent sur le pilier, à savoir entre le pilier, le fond, l'habillage et la porte (par les charnières).

Les moyens de fixation 24 de l'embase 22 se mettent en vis-à-vis d'orifices 13, 15 de fixation de la deuxième surface du montant 12B et de la traverse 14B; ils sont aptes à réaliser un serrage afin d'optimiser la rigidité de la liaison au coin 18. En particulier, il est préféré que l'embase 22 du pilier 20 prenne appui, par exemple par l'intermédiaire d'un rebord, sur l'un des profilés 12 et, notamment par l'intermédiaire d'une protubérance 28 s'étendant sous l'embase 22 et servant d'entretoise, également sur l'autre profilé 14. Un appui surfacique avec serrage, illustré en figure 3B; assure une liaison rigide de sorte qu'il est possible que les orifices de fixation 13, 15 des profilés 12, 14 tolèrent un certain jeu afin de faciliter les alignements. De préférence, la fixation est réalisée par vissage et l'orifice 24 du pilier 20 est localisé dans l'entretoise 28 ; une vis 30 peut y assurer l'assemblage du pilier 20, par exemple avec un écrou 32 métallique, qui peut ou non faire partie de la partie de fond. En particulier dans le mode de réalisation préféré dans lequel la première surface des traverses 14 est externe à l'enveloppe du coffret, la paroi de fond 10 peut ne pas être sollicitée par le vissage ; l'emboîtement et le serrage sont d'autant facilités, avec solidarisation de l'écrou 32 à l'extrémité de la protubérance 28 au niveau de l'orifice 15 de la deuxième surface 14B de la traverse 14.

D'autres alternatives de fixation sont-possibles. Quelle que soit la solution choisie, l'emboîtement des traverses 14 et montants 12 et la rigidification du cadre ainsi formé sont réalisés directement par les piliers 20 ; dans le mode de réalisation préféré, quatre vissages suffisent pour assembler une ossature rigide composée de la paroi de fond 10, des traverses 14, des montants 12 et des piliers 20, sans étape supplémentaire par rapport à l'art antérieur ; l'ossature de montage des appareillages électriques comprend une partie rectangulaire de fond 10 encadrée sur ses côtés par quatre rebords 16, et aux coins 18 de laquelle l'espace entre les rebords 16 est comblé par des faces externes 26 du pilier 20 ; avantageusement, les deux faces externes 26 de chaque pilier 20 sont refermées au niveau de l'extrémité inférieure par une surface parallèle à l'embase 22 dont la forme correspond à la découpe de la paroi de fond 10. Suivant le degré d'étanchéité souhaité, il est possible de positionner un joint au niveau des surfaces en contact sans modifier le procédé de montage.

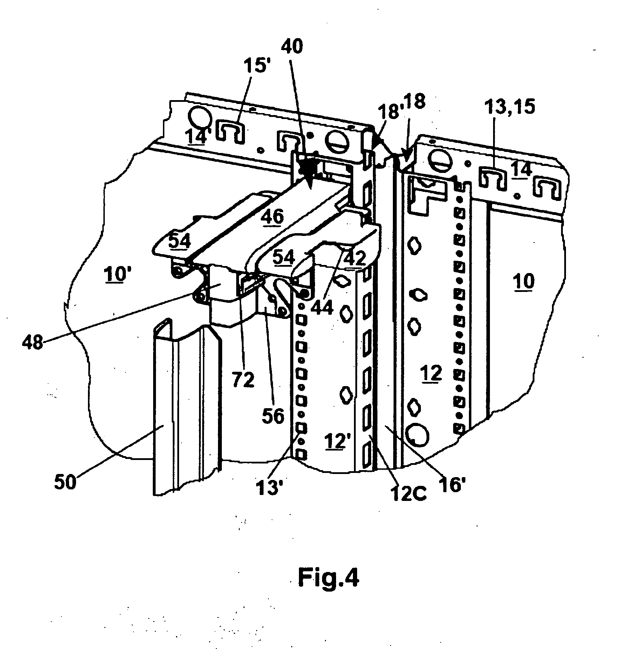

Dans certaines configurations, des enveloppes sont associées, par exemple un coffret avec une gaine. Selon un mode de réalisation préféré de l'invention, un coffret 100 peut être associe à une extension 100' en solidarisant les ossatures l'une à l'autre, En particulier, il est possible, pour une partie de fond 10, 12, 14 telle que présentée en relation avec la figure 2B, d'utiliser un pilier 40 modifié afin de coupler de façon mécanique une deuxième partie de fond 10', 12', 14' similaire juxtaposée : les deux parties de fond sont solidarisées entre elles par deux piliers d'association 40 qui sont mis en place de façon similaire aux piliers d'angle 20, et correspondent sensiblement à deux piliers d'angles soudés côte à côte. Tel qu'illustré en figure 4, un pilier d'association 40, avantageusement fabriqué en plastique moulé et symétrique, comprend ainsi une embase double 42 munie de moyens de fixation 44, solidaire d'une face orthogonale 46 qui forme une partie d'une paroi latérale externe de l'enveloppe de l'association de coffrets ; l'embase 42 est, de la même façon que pour un pilier d'angle 20, décalée de l'extrémité inférieure de la face externe 46.

L'assemblage du coffret et de son extension s'effectue par l'emboîtement du pilier d'association 40 dans l'espace résultant de la juxtaposition des deux coins ouverts 18, 18' ; de la même façon que pour les piliers d'angle 20, une protubérance peut permettre une mise en place et un serrage par l'intermédiaire de vis, de préférence identiques à celles utilisées pour les piliers d'angle 20, sur les orifices 13, 13', 15, 15' des profilés. Selon un mode de réalisation avantageux, afin de rigidifier l'ensemble, les piliers d'association 40 comprennent un aménagement 48 permettant la mise en place d'une règle 50 les couplant entre eux, par exemple par encliquetage ou vissage, parallèlement aux montants 12, 12' et en haut du pilier 40. La règle 50, qui peut être en plastique moulé, correspond sensiblement à la partie supérieure d'une paroi verticale de coffret ; il est possible de modifier cette règle 50 pour former une paroi pleine ou ajourée selon le besoin.

Grâce à cette option, l'association de coffrets ou l'extension d'une enveloppe sont facilitées, y compris pour une modification d'un coffret 100 déjà en service ; qui plus est, le nombre de références industrielles peut être diminué étant donné que les différents composants sont identiques quelle que soit la configuration choisie. En outre, aucun découpage de paroi n'est imposé. Il est enfin à noter que cette option peut être adaptée si une étanchéité supérieure est souhaitée, avec mise en place entre les bords 16, 16' d'un joint qui sera comprimé par le simple vissage des piliers 40.

L'assemblage d'une enveloppe pour un coffret 100, avec ou sans extension, se poursuit par la mise en place de panneaux latéraux 52 fermant les espaces entre les piliers 20, 40. Il est possible de plaquer les panneaux 52 sur les faces externes 26, 46 des piliers en les y collant, ou vissant ; cependant, pour des raisons esthétiques autant que pour faciliter un éventuel montage étanche, selon un mode de réalisation avantageux, les faces externes 26, 46 des piliers 20, 40 sont apparentes et forment une partie de la paroi externe du coffret 100. Il est alors avantageux pour faciliter la mise en place des parois latérales 52 de prolonger lesdites faces externes 26, 46 par des ailes 54 servant de support aux panneaux 52, par exemple décalées de l'épaisseur du panneau vers l'intérieur de l'enveloppe par rapport aux faces externes 26, 46, sur lesquelles les panneaux 52, en plastique ou en tôle, peuvent être plaqués.

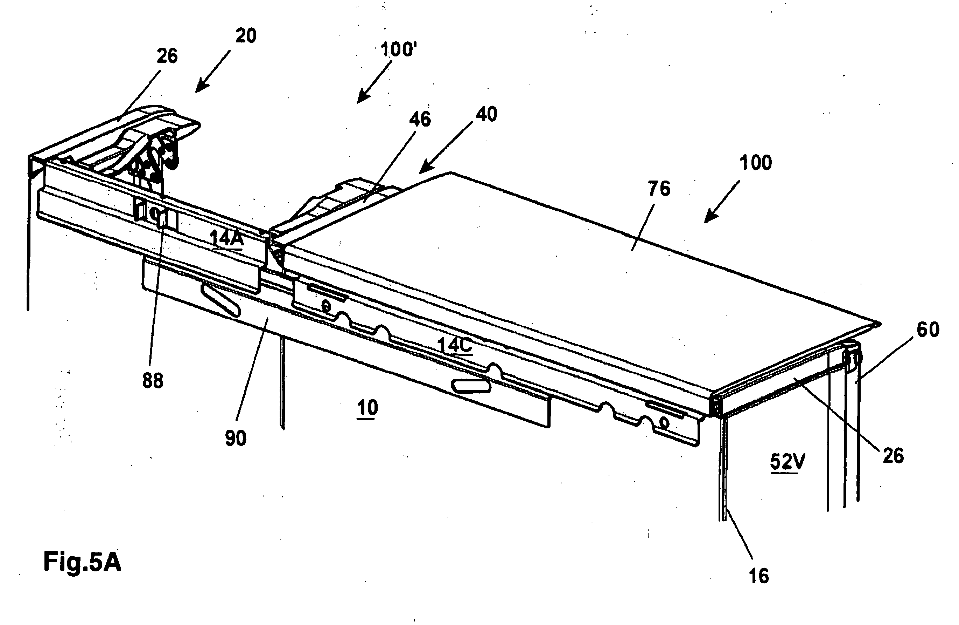

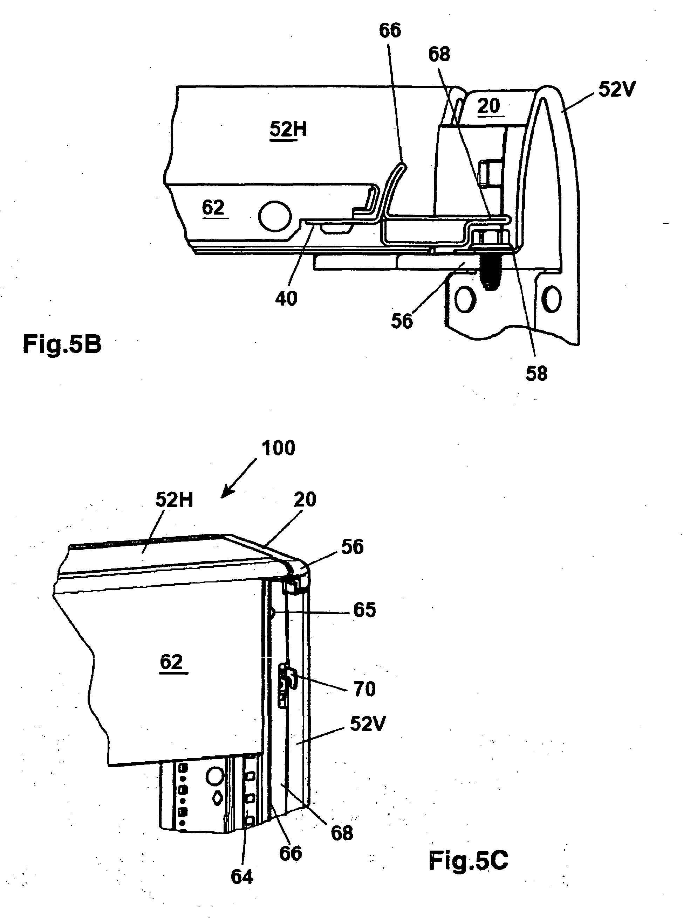

Selon une option, des parois latérales 52 sont fixées sur les montants 12 et les traverses 14 soudés à la paroi de fond 10 ; les profilés 12, 14 comprennent alors une surface orthogonale aux première et deuxième surfaces 12A, 14A sur laquelle les panneaux peuvent être vissés ou collés ; en particulier, des orifices peuvent être prévus sur le rebord 16₂ formé par les traverses 14. De même, une base 12C formant un U avec les première et deuxième surfaces d'un profilé dépasse du bord 16₁ contre lequel il est placé pour laisser des orifices de fixation, libres (figure 2B) ; dans ce cas, il est possible de conserver un espace entre le montant 12C et le rebord 16₁ de la plaque de fond 10 pour y glisser un panneau latéral 52V, qui peut être solidarisé contre les piliers 20, 40 (figure 5A). Une forme adéquate de découpe du pilier 20, 40 et de la paroi 52 peut être envisagée et en particulier, une surface d'appui 56 appropriée du pilier 20, 40 peut coopérer avec une excroissance 58 de la paroi 52V (figure 5B): tel qu'illustré, les piliers 20, 40 comprennent une surface 56 sensiblement parallèle à l'embase 22, 42 et décalée du haut des faces externes 26, 46, munie ici d'orifices de vissage pour des rebords 58 des parois latérales 52V. Toute autre option de montage des parois latérales 52 peut être envisagée.

Le coffret 100 est alors prêt à être équipé, par mise en place d'appareillages électriques sur les montants 14 et/ou traverses 12 (non illustré) ; inversement, l'équipement du coffret peut être préalable à l'habillage par les parois 52.

Ensuite, l'assemblage du coffret se poursuit par un habillage frontal et une fermeture. De fait, si une porte 60, notamment transparente, ferme l'enveloppe, il est usuel de positionner un ou plusieurs plastrons 62 parallèlement à la paroi de fond 10 devant les appareillages électriques, tant pour des raisons esthétiques que protectrices : voir figure 5C. Usuellement, les plastrons 62 sont montés, notamment par vissage, sur des rails 64, par exemple métalliques, servant de support, et couplés aux piliers 20, 40. A cette fin, la surface 56 de fixation des parois 52V peut être utilisée pour y visser également, avantageusement dans d'autres orifices 65 que les parois 52V, des rails 64 percés pour le montage des plastrons 62. Il est en outre avantageux que les parois 52V comprennent alors un rebord de support pour les rails 64 ; notamment, l'excroissance 58 de fixation de la paroi 52V peut être prolongée tout au long du panneau 52V - ce rebord 58, par exemple obtenu par pliage du panneau 52V, peut être présent uniquement pour cette fonction de maintien si un vissage sur le pilier 20 n'est pas prévu.

Selon le mode de réalisation préféré illustré, seuls deux rails 64 sont mis en place parallèlement aux montants 12. Avantageusement, le rail 64 est en tôle pliée, de conception optimisée. En particulier, tel qu'illustré en figure 5B, le rail 64 comprend une partie 66 servant de préhenseur intégré, et une aile 68 permettant de masquer les têtes des vis de fixation des parois 52 sur les piliers 20, 40 de façon à empêcher le démontage de l'enveloppe, ainsi que pour protéger l'éventuel pêne 70 de la porte 60. Cette configuration permet par ailleurs de monter les plastrons 62 de façon pivotante : par le retrait des vis de fixation 65 d'un seul rail 64 et un montage adéquat pivotant de l'autre, il est possible de configurer l'ensemble rails 64 et plastrons 62 comme une porte. L'utilisation de joints aux endroits appropriés (support 58 et surface de vissage 56 des piliers), permet un assemblage pour une étanchéité supérieure sans difficulté de montage supplémentaire.

Selon le mode de réalisation illustré, la porte 60 est montée de façon à former la paroi frontale du coffret. En particulier, la porte 60 est solidarisée directement sur la face supérieure des piliers 20, 40 par des moyens adaptés 72 et son épaisseur forme une partie externe de l'enveloppe du coffret. D'autres options sont envisageables, avec par exemple une porte pivotant sur un axe d'un rail de montage interne aux parois latérales 52V.

Suivant l'habillage interne 62, 64 et la fermeture 60 du coffret 100, ses quatre parois latérales 52 peuvent être identiques ou, tel qu'il apparaît du mode de réalisation préféré présenté, les deux parois 52V parallèles aux montants 12 peuvent être différentes des parois 52H parallèles aux traverses 14. En particulier, le montage des parois 52H parallèles aux traverses 14 peut être réalisé directement sur ces dernières au niveau du rebord 16₂ : la paroi 52H peut avoir la forme d'une simple tôle non pliée. Il est préférable que l'une des parois 52, de préférence la paroi supérieure 52H, soit réalisée au moins partiellement en matériau plastique et/ou aménagée pour permettre le passage des câbles d'alimentation des appareillages dans le coffret 100. En particulier, il peut être avantageux, par exemple pour protéger l'avant du coffret et la porte 60, de composer la paroi supérieure en deux parties, avec un panneau 52H' plastique dit « passe-câbles » plus court que la paroi latérale et un appendice métallique qui peut lui être encliqueté ou riveté (non illustré).

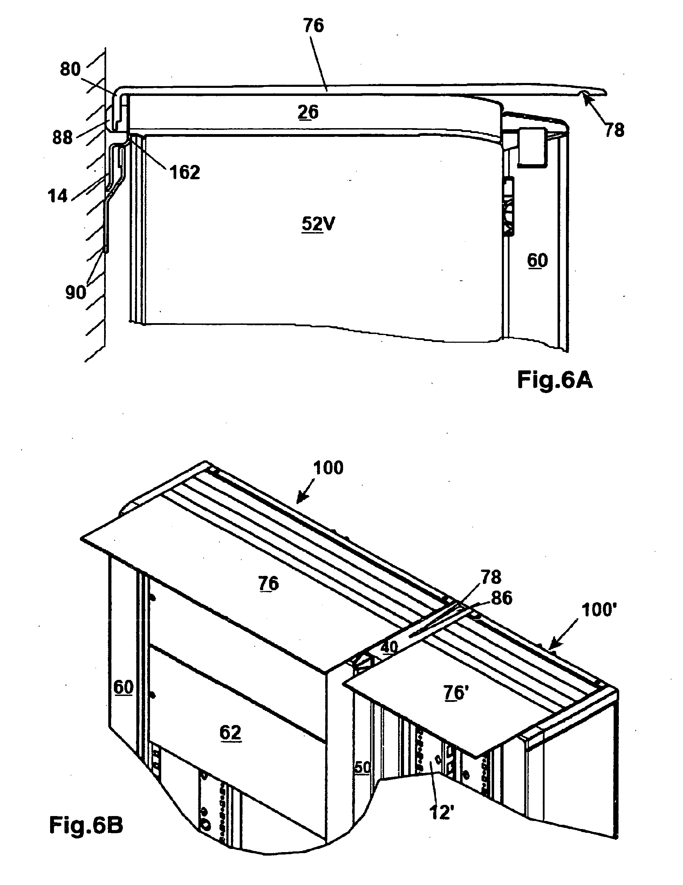

Si le coffret est destiné à être placé dans une ambiance agressive nécessitant une étanchéité supérieure de type IP43, une protection additionnelle vis-à-vis de la pluie est souhaitée, et il est possible de modifier la paroi 52H supérieure du coffret de façon à en faire un auvent étanche 76 ; cette modification peut être faite à un stade ultérieur, c'est-à-dire par exemple alors que le coffret 100 est déjà utilisé. En particulier, un panneau en plastique, de largeur supérieure à l'enveloppe avec la porte 60, est mis en place sur les piliers supérieurs en lieu et place d'un panneau 52. Dans ce mode de réalisation illustré en figures 5A et 6A, il est particulièrement avantageux que l'auvent 76 se fixe par vissage sur un bord 16₂ (une traverse 14) du coffret. La forme de l'auvent 76 est adaptée à sa fonction : en particulier, tel qu'illustré, l'auvent comprend une surface supérieure pentue vers l'arrière et une découpe 78 pour faire tomber les gouttes d'eau avant ruissellement sur sa surface inférieure ; un rebord arrière 80 protecteur de la surface murale de la paroi de fond 10, 14, de préférence espacé de celle-ci, est préconisé. Avantageusement, l'auvent 76 est associé à une plaque d'habillage supérieur du coffret 100 qui le maintient en position sur le devant et permet l'appui de la porte 60, par une forme ogivale dans le mode de réalisation représenté.

La même solution pour la mise en place d'un auvent peut être adoptée quel que soit le degré d'étanchéité requis, y compris pour les associations de coffrets. Il est avantageux, contrairement aux parois 52V d'habillage, que l'auvent 76 soit solidarisé au dessus des faces externes 26 des piliers d'angle 20 et non dans leur prolongement pour éviter toute infiltration, mais d'autres moyens de type joints sont possibles.

Outre la simplicité de mise en place d'un auvent 76 selon l'invention, la solution préconisée permet une rationalisation des stocks étant donné que les auvents 76 peuvent être découpés dans les longueurs correspondant aux dimensions des coffrets 100 de la gamme. En effet, dans le cas d'associations d'enveloppes, un auvent 76, 76' selon l'invention peut être mis en place sur chacun des éléments 100, 100' de l'association, et un usinage approprié 86, de type gorge de profondeur croissante, de la paroi externe 46 du pilier d'association 40 permet une évacuation par guidage de l'eau vers l'arrière du coffret (figure 6B).

Le coffret 100 assemblé selon l'invention peut être placé debout sur le sol, en particulier dans le cas de coffrets de grande hauteur (armoires) ; il est alors usuel d'ajouter des pieds qui peuvent être solidarisés aux traverses, parois et/ou piliers inférieurs. Dans un mode de réalisation préféré, le coffret 100 est accroché à un mur Au vu de la conception de l'enveloppe, et notamment de la présence de traverses 14 dont une surface 14A est externe à l'enveloppe, un système d'accrochage par coopérations de deux rails est préféré. En particulier, la traverse 14 supérieure est conçue en cymaise, et comprend une troisième surface 14C parallèle à la première surface 14A et décalée vers l'extérieur de la partie de fond : la troisième surface 14C forme avec la paroi de fond 10 une corniche d'accrochage. La cymaise ainsi formée peut se mettre en place sur des moyens accrochés au mur dont la forme concorde. Avantageusement, des moyens d'entretoise 88 sont présents afin de maintenir l'écart entre la paroi de fond 10 et la troisième surface 14C ; de préférence, les moyens d'entretoise sont de type découpe locale de la première surface 14A, et n'impliquent aucune modification de parties d'habillage en tôle 52 du coffret 100.

La suspension du coffret sur le mur est ainsi réalisée de façon intuitive : il y a simple emboîtement du haut 14 du coffret sur les moyens adaptés 90 dont l'accrochage sur le mur est facilité en ce qu'il se fait en l'absence de tout coffret. En outre, la mise de niveau est aisée, étant donné que les moyens cloués ou vissés au mur peuvent comprendre un rail longitudinal 90, par exemple d'une longueur proche de celle de la traverse 14, plus facile à positionner ; il est possible également d'allonger le rail 90 pour y suspendre plusieurs coffrets 100, 100' éventuellement associés entre eux selon l'invention. Un verrouillage du coffret 100 sur le mur peut ensuite être réalisé, notamment par perçage et fixation dans un orifice de l'ossature 10, 12, 14, 20, de préférence dans un orifice central 15 de la traverse 14 inférieure ; des moyens d'entretoise 88 similaire peuvent être présents sur la traverse basse de façon à maintenir un écart du coffret par rapport au mur.

La conception du coffret selon l'invention permet ainsi d'optimiser la réalisation de coffrets « en kit », en particulier avec un nombre de pièces et/ou d'opérations d'assemblage diminué, sans nuire à la robustesse du produit final et sans complexifier les formes des pièces :
- La tôle de la paroi de fond 10 ainsi que des profilés 12, 14 peut être fine, et les soudures sont limitées à la surface suffisante des montants 12 et traverses 14, de sorte que le coût n'est pas augmenté ;
- Les formes des montants 12, traverses 14 et paroi de fond 10 peuvent être optimisées, par exemple avec un profilage de découpe à la volée, de sorte qu'aucun investissement industriel n'est nécessaire ;
- Il est possible d'utiliser des profilés 12, 14 identiques pour toutes les dimensions usuelles de coffret 100 et découpés à la longueur adéquate, c'est-à-dire dans la gamme de 300 à 1850 mm pour les montants 12 et de 300 à 600 pour les traverses 14. Cet avantage se retrouve en ce qui concerne les auvents de protection 76 ;
- L'assemblage des montants 12 et traverses 14 peut être réalisé uniquement sur la plaque de fond 10, ce qui augmente les tolérances à la fabrication et diminue les coûts ;
- L'assemblage des montants et traverses 12, 14 par soudage (ou autre) peut être effectué préalablement à une livraison, ceci sans générer d'encombrement problématique au transport, de sorte que l'assemblage par le client ne comprenne que des étapes simples et ne nécessitant pas d'outillage spécifique ;
- Le nombre de composants pour réaliser l'assemblage par le client est diminué, avec notamment uniquement quatre vissages des piliers 20 pour réaliser une partie de fond rigide - de fait, l'ensemble selon l'invention comprend des traverses 14 et des montants 12 directement mis en place sur la paroi de fond 10, et le client ne positionne que les piliers 20, tout comme dans l'art antérieur ;
- L'assemblage de l'enveloppe est facile et ergonomique, avec simplement des vissages et des emboîtements assistés en guidage ;
- Les extensions 100' de coffrets sont réalisées de la même façon que les assemblages « traditionnels » d'enveloppes ;
- Il est possible de mettre en place un auvent 76 de protection contre les intempéries sans ouvrager la partie haute du coffret, de façon réversible, simplement en remplaçant une paroi 52H ;
- L'assemblage d'un auvent 76 est identique à l'assemblage des parois passe-câbles 52H, et assure une tenue robuste et une protection 80 arrière à l'enveloppe ;
- L'assemblage de l'enveloppe est similaire quel que soit le degré d'étanchéité, que ce soit pour une association de coffrets et/ou une protection par auvent 76 ;
- Le montage du coffret 100 sur un mur est facilité, avec emboîtement de la partie supérieure 14 sur un rail 90 mis en place de façon indépendante, puis verrouillage du coffret 100 déjà suspendu pour éliminer tous les jeux ;
- La mise à niveau du coffret 100 est assurée par la géométrie de la cymaise et son montage préalable en usine, ainsi que par l'accrochage d'un simple rail 90 sur une paroi verticale ;
- Des formes adaptées 88 de la traverse de suspension 14 permettent de maintenir un éloignement entré le mur et le coffret, pour ne pas répercuter les défauts du support sur la géométrie de l'enveloppe.

Bien que l'invention ait été décrite en référence à un coffret de configuration précise, elle ne s'y limite pas : en particulier, les modifications de chacun des composants de l'enveloppe selon l'invention peuvent être dissociées, et il est possible de parvenir à d'autres combinaisons.

## Revendications

1. Ensemble pour fabriquer un coffret électrique (100) dont l'enveloppe est sensiblement parallélépipédique rectangle comprenant :
- une première paroi de fond (10) sensiblement rectangulaire formant une surface de l'enveloppe du coffret ;
- deux traverses (14) et deux montants (12) comprenant chacun un profilé creux dont une première surface (12A, 14A) est solidarisée à la paroi de fond (10) le long d'un de ses côtés et une deuxième surface (12B, 14B) parallèle à la première surface est munie d'au moins un orifice de fixation (13, 15) ;
de sorte que ladite paroi (10) munie des traverses (14) et des montants (12) comprend quatre arêtes définies par la paroi de fond (10) et un rebord (16) qui lui est orthogonal, lesdites arêtes étant encadrées par quatre coins (18) donnant chacun accès à une extrémité ouverte d'un profilé de traverse (14) et d'un profilé de montant (12) ;
- quatre piliers d'angle (20) pouvant s'emboîter dans un coin (18), comprenant chacun une embase (22) et deux faces externes (26) orthogonales entre elles et à l'embase (22), ladite embase (22) comprenant des moyens de fixation (24) qui peuvent coopérer avec un orifice de fixation (13, 15) des profilés dudit coin (18) en position emboîtée.

2. Ensemble selon la revendication 1 dans lequel les traverses (14) et les montants (12) sont solidarisés de façon fixe à la première paroi de fond (10).

3. Ensemble selon l'une des revendications 1 ou 2 dans lequel les moyens de fixation des embases (22) des piliers d'angle (20) comprennent un orifice (24), et comprenant en outre des vis (30) pour solidariser les piliers (20) aux traverses (14) et montants (12).

4. Ensemble selon l'une des revendications 1 à 3 dans lequel la paroi de fond (10) est comprise dans une tôle métallique, ladite tôle étant pliée pour former au moins deux rebords (16₁).

5. Ensemble selon l'une des revendications 1 à 4 dans lequel une traverse (14) au moins est solidarisée le long d'un côté de la première paroi de fond (10) de sorte que ladite traverse (14) forme une arête et un rebord (16₂) à ladite paroi.

6. Ensemble selon la revendication 5 dans lequel une traverse (14) formant un rebord (16₂) à la paroi de fond (10) comprend en outre une troisième surface (14C) sensiblement parallèle à la première surface (14A) et prolongeant ladite première surface (14A) du côté opposé audit rebord (16₂), la première paroi de fond (10) étant localisée au sein du profilé de ladite traverse (14), de sorte que ladite traverse (14) forme une cymaise de suspension du coffret électrique (100).

7. Ensemble selon la revendication 6 dans lequel la traverse (14) formant cymaise comprend des protubérances (88) orthogonales servant d'entretoises lors de l'accrochage et comprenant en outre un rail d'accrochage (90) coopérant avec ladite traverse (14).

8. Ensemble selon l'une des revendications 1 à 7 comprenant en outre au moins une extension de coffret électrique, ladite extension (100') comprenant :
- une deuxième paroi de fond rectangulaire (10') munie de deux traverses (14') et deux montants (12') solidarisés similairement à la solidarisation des montants (12) et des traverses (14) sur la première paroi de fond (10), le côté de la deuxième paroi de fond (10') parallèle aux montants (12') étant de taille identique au côté de la première paroi de fond (10) parallèle aux montants (12) ; et
- deux piliers d'association (40) comprenant chacun une embase (42) et une face externe (46) orthogonale à ladite embase (42), chaque pilier d'association (40) pouvant s'emboîter dans l'espace formé par un coin (18) de la première paroi de fond (10) juxtaposé avec un coin (18') de la deuxième paroi de fond (10'), ladite embase (42) comprenant des moyens de fixation (44) qui peuvent coopérer avec un orifice de fixation (13, 15) des profilés de chacun desdits coins (18, 18') en position emboîtée.

9. Ensemble selon la revendication 8 dans lequel la face externe (46) d'un pilier d'association (40) comprend une surface munie d'une gorge d'évacuation (86).

10. Ensemble selon l'une des revendications 1 à 9 dans lequel les piliers (20, 40) sont réalisés en matériau plastique et comprennent des renforts métalliques (25) assurant la continuité électrique.

11. Ensemble selon l'une des revendications 1 à 10 dans lequel les faces externes (26, 46) de chaque pilier (20, 40) forment une partie de l'enveloppe du coffret lorsque les piliers (20, 40) sont mis en place sur la(les) paroi(s) de fond (10).

12. Ensemble selon l'une des revendications 1 à 11 comprenant en outre au moins deux rails de support (64) de plastrons et dans lequel les piliers (20, 40) comprennent une surface (56) parallèle à l'embase (22, 42) sur laquelle lesdits rails (64) peuvent se mettre en place.

13. Ensemble selon l'une des revendications 1 à 12 comprenant en outre des parois latérales (52) pouvant être mises en place entre les piliers (20, 40) dans le prolongement de leurs faces externes (26, 46) une fois lesdits piliers (20, 40) emboîtés dans les coins (18).

14. Ensemble selon la revendication 13 dans lequel une paroi latérale (52H) parallèle à une traverse (14) est un auvent plastique (76) dépassant des faces externes (26, 46) des piliers une fois lesdits piliers (20, 40) assemblés.

15. Coffret électrique comprenant un ensemble selon l'une des revendications 13 à 14 dont les éléments sont assemblés et au moins une porte (60) refermant l'espace entre les parois latérales (52) parallèlement à la(les) paroi(s) de fond (10, 10').

## Claims

1. A kit for constructing an electrical cabinet (100) having an enclosure that is substantially a rectangular parallelepiped comprising:
- a substantially rectangular first back panel (10) forming a surface of the enclosure of the cabinet;
- two cross-members (14) and two uprights (12) each comprising a hollow section, a first surface (12A, 14A) whereof is securedly attached to the back panel (10) along one of its sides and a second surface (12B, 14B) whereof, parallel to the first surface, is provided with at least one fixing hole (13, 15);
so that said wall (10) equipped with cross-members (14) and uprights (12) comprises four edges defined by the back panel (10) and a rim (16) that is orthogonal thereto, said edges being framed by four corner-pieces (18) each giving access to an open end of a cross-member section (14) and of an upright section (12);
- four corner pillars (20) able to fit into a corner-piece (18), each comprising a base (22) and two external faces (26) orthogonal to one another and to the base (22), said base (22) comprising fixing means (24) that can operate in conjunction with a hole (13, 15) for securing the sections of said corner-piece (18) in the engaged position.

2. Kit according to claim 1 wherein the cross-members (14) and uprights (12) are secured in fixed manner to the first back panel (10).

3. Kit according to one of claims 1 or 2 wherein the means for fixing the bases (22) of the corner pillars (20) comprise a hole (24), and further comprising screws (30) to secure pillars (20) to the cross-members (14) and uprights (12).

4. Kit according to one of claims 1 to 3 wherein the back panel (10) is comprised in a metal plate, said plate being folded to form at least two rims (16₁).

5. Kit according to one of claims 1 to 4 wherein at least one cross-member (14) is securedly attached along one side of the first back panel (10) so that said cross-member (14) forms an edge and a rim (16₂) on said wall.

6. Kit according to claim 5 wherein a cross-member (14) forming a rim (16₂) on the back panel (10) further comprises a third surface (14C) substantially parallel to the first surface (14A) and extending said first surface (14A) on the opposite side to said rim (16₂), the first back panel (10) being located within the section of said cross-member (14), so that said cross-member (14) forms a suspension rail of the electrical cabinet (100).

7. Kit according to claim 6 wherein the cross-member (14) forming a support rail comprises orthogonal protuberances (88) acting as spacers when fitting is performed and further comprising a fitting rail (90) cooperating with said cross-member (14).

8. Kit according to one of claims 1 to 7 further comprising at least one electrical cabinet extension, said extension (100') comprising:
- a rectangular second back panel (10') equipped with two cross-members (14') and two uprights (12') secured in a similar way to securing of the uprights (12) and cross-members (14) on the first back panel (10), the side of the second back panel (10') parallel to the uprights (12') being of identical size to the side of the first back panel (10) parallel to the uprights (12); and
- two association pillars (40) each comprising a base (42) and an external surface (46) orthogonal to said base (42), each association pillar (40) being able to be fitted into the space formed by a corner-piece (18) of the first back panel (10) juxtaposed with a corner-piece (18') of the second back panel (10'), said base (42) comprising fixing means (44) that can operate in conjunction with a fixing hole (13, 15) of the sections of each of said corner-pieces (18, 18') in the engaged position.

9. Kit according to claim 8 wherein the external surface (46) of an association pillar (40) comprises a surface provided with an evacuation groove (86).

10. Kit according to one of claims 1 to 9 wherein the pillars (20, 40) are made from plastic material and comprise metal strengtheners (25) ensuring electrical continuity.

11. Kit according to one of claims 1 to 10 wherein the external surfaces (26, 46) of each pillar (20, 40) form a part of the enclosure of the cabinet when the pillars (20, 40) are fitted on the back panel(s) (10).

12. Kit according to one of claims 1 to 11 further comprising at least two support rails (64) supporting front plates and wherein the pillars (20, 40) comprise a surface (56) parallel to the base (22, 42) on which said rails (64) can be fitted.

13. Kit according to one of claims 1 to 12 further comprising side walls (52) able to be fitted between the pillars (20, 40) in the extension of the external surfaces (26, 46) of the latter once said pillars (20, 40) have been fitted in the corner-pieces (18).

14. Kit according to claim 13 wherein a side wall (52H) parallel to a cross-member (14) is a plastic canopy (76) extending beyond the external surfaces (26, 46) of the pillars once said pillars (20, 40) have been assembled.

15. An electrical cabinet comprising a kit according to one of claims 13 to 14, the elements whereof are assembled and at least one door (60) closing off the space between the side walls (52) in a direction parallel to the back plate(s) (10,10').

## Patentansprüche

1. Anordnung zur Herstellung eines Elektrogehäuses (100) mit einem annähernd rechteckigen, kastenförmigen, Grundkörper, der
- eine annähernd rechteckige erste Rückwand (10), welche eine Seite des Grundkörpers des Gehäuses bildet,
- zwei Traversen (14) und zwei Längsholme (12) mit jeweils einem Hohlprofil, die eine längs einer ihrer Seiten mit der Rückwand (10) verbundene erste Fläche (12A, 14A) sowie eine parallel zur ersten Fläche verlaufende und mit mindestens einer Befestigungsöffnung (13, 15) versehene zweite Fläche (12B, 14B) aufweisen,
derart, dass die genannte, mit den Traversen (14) und den Längsholmen (12) versehene Wand (10) vier Kanten aufweist, die durch die Rückwand (10) sowie eine rechtwinklig zu dieser stehende Randleiste (16) definiert sind und an vier Ecken (18) zusammenlaufen, an denen jeweils ein offenes Ende eines Traversenprofils (14) und eines Längsholmprofils (12) frei zugänglich ist,
- sowie vier Eckverbinder (20) umfasst, die in die Ecken (18) eingesetzt werden können und jeweils eine Fußplatte (22) sowie zwei rechtwinklig zueinander und zur Fußplatte (22) verlaufende Außenseiten (26) umfassen, wobei die genannte Fußplatte (22) Befestigungsmittel (24) umfasst, die in der eingesetzten Stellung der Eckverbinder an den genannten Ecken (18) mit einem Befestigungsloch (13, 15) der Profile zusammenwirken können.

2. Anordnung nach Anspruch 1, bei der die Traversen (14) und die Längsholme (12) unlösbar mit der ersten Rückwand (10) verbunden sind.

3. Anordnung nach einem der Ansprüche 1 oder 2, bei der die Befestigungsmittel der Fußptatten (22) der Eckverbinder (20) eine Öffnung (24) umfassen, die außerdem Schrauben (30) umfasst, um die Eckverbinder (20) mit den Traversen (14) und den Längsholmen (12) zu verbinden.

4. Anordnung nach einem der Ansprüche 1 bis 3, bei der die Rückwand (10) aus einem Blech geformt ist, das zur Bildung von mindestens zwei Randleisten (16₁) umbogen ist.

5. Anordnung nach einem der Ansprüche 1 bis 4, bei der mindestens eine Traverse (14) längs einer Seite der ersten Rückwand (10) mit dieser Rückwand verbunden ist, derart dass die genannte Traverse (14) eine Kante bzw. eine Randleiste (16₂) der genannten Wand bildet.

6. Anordnung nach Anspruch 5, bei der eine, eine Randleiste (16₂) der Rückwand (10) bildende Traverse (14) eine dritte Fläche (14C) umfasst, die annähernd parallel zur ersten Fläche (14A) verläuft und eine Verlängerung der genannten ersten Fläche (14A) auf der, der genannten Randleiste (162) abgewandten Seite darstellt, wobei die erste Rückwand (10) innerhalb des Profils der genannten Traverse (14) liegt, derart dass die genannte Traverse (14) eine überstehende Abschlussleiste zur Hängebefestigung des Elektrogehäuses (100) bildet.

7. Anordnung nach Anspruch 6, bei der die als Abschlussleiste ausgebildete Traverse (14) rechtwinkelige Vorsprünge (88), welche bei der Befestigung des Gehäuses als Abstandshalter dienen, und darüber hinaus eine Befestigungsschiene (90) umfasst, die mit der genannten Traverse (14) zusammenwirkt.

8. Anordnung nach einem der Ansprüche 1 bis 7, die außerdem mindestens eine Erweiterung des Elektrogehäuses umfasst, welche Erweiterung (100'):
- eine rechteckige zweite Rückwand (10') mit zwei Traversen (14') und zwei Längsholmen (12'), die analog zu den Längsholmen (12) und Traversen (14) der ersten Rückwand (10) befestigt sind, wobei die parallel zu den Längsholmen (12') der zweiten Rückwand (10') angeordnete Seite die gleiche Abmessung aufweist wie die parallel zu den Längsholmen (12) der ersten Rückwand (10) angeordnete Seite, sowie
- zwei Erweiterungs-Eckverbinder (40) umfasst, die jeweils eine Fußplatte (42) sowie eine rechtwinklig zur genannten Fußplatte angeordnete Außenseite (46) umfassen, wobei jeder Erweiterungs-Eckverbinder (40) in den Freiraum einer Ecke (18) der ersten Rückwand (10) eingesteckt werden kann, die an eine Ecke (18') der zweiten Rückwand (10') grenzt, und die genannte Fußplatte (42) Befestigungsmittel (44) umfasst, die in der eingesetzten Stellung mit einer an den genannten Ecken (18, 18') in den Profilen ausgebildeten Befestigungsöffnung (13, 15) zusammenwirken können.

9. Anordnung nach Anspruch 8, bei der die Außenseite (46) eines Erweiterungs-Eckverbinders (40) eine Fläche umfasst, in der eine Ableitrinne (86) ausgebildet ist (86).

10. Anordnung nach einem der Ansprüche 1 bis 9, bei der die Eckverbinder (20, 40) aus Kunststoff bestehen und Metallverstärkungen umfassen (25), welche die elektrische Leitung sicherstellen.

11. Anordnung nach einem der Ansprüche 1 bis 10, bei der die Außenseiten (26, 46) jedes Eckverbinders (20, 40) nach dem Einsetzen der Eckverbinder (20, 40) in die Rückwand/ Rückwände (10) einen Teil des Gehäuse-Grundkörpers (10) bilden.

12. Anordnung nach einem der Ansprüche 1 bis 11, die außerdem mindestens zwei Tragschienen (64) zur Befestigung von Frontabdeckungen umfasst und bei der die Eckverbinder (20, 40) eine parallel zur Fußplatte (22, 42) angeordnete Fläche (56) umfassen, auf der die genannten Tragschienen (64) befestigt werden können.

13. Anordnung nach einem der Ansprüche 1 bis 12, die außerdem Seitenwände (52) umfasst, welche nach dem Einsetzen der genannten Eckverbinder (20, 40) in die zugehörigen Ecken (18) zwischen den Eckverbindern (20, 40) fluchtend mit deren Außenseiten (26, 46) montiert werden können.

14. Anordnung nach Anspruch 13, bei der eine parallel zu einer Traverse (14) verlaufende Seitenwand (52H) als Dachabdeckung (76) Kunststoff ausgebildet ist, die nach dem Einsetzen der genannten Eckverbinder (20, 40) über deren Außenseiten (26, 46) hinausragt.

15. Elektrogehäuse, das eine Anordnung nach einem der Ansprüche 13 bis 14 mit zusammengebauten Einzelteilen sowie mindestens eine Tür (60) umfasst, die den parallel zur Rückwand/den Rückwänden (10, 10') zwischen den Seitenwänden (52) ausgebildeten Raum abschließt.
